# EUROPEAN PATENT APPLICATION

(11) **EP 1 852 630 A1**
(43) Date of publication of application: **07.11.2007**
(21) Application number: 06713483.3
(22) Date of filing: 10.02.2006
(51) Int. Cl.: F16F 15/02

(54) **VIBRATION REDUCING BRACKET**

(30) Priority: 18.02.2005 JP 2005042731; 12.01.2006 JP 2006004426
(71) Applicant: KABUSHIKI KAISHA KOBE SEIKO SHO, Kobe-shi, Hyogo 651-8585 (JP)
(72) Inventor: SUGIMOTO, Akio, Kabushiki Kaisha Kobe Seiko Sho, Kobe-shi, Hyogo 651-2271 (JP); YAMAGUCHI, Zenzo, Kabushiki Kaisha Kobe Seiko Sho, Kobe-shi, Hyogo 651-2271 (JP)
(74) Representative: Gillard, Richard Edward
(86) International application number: PCT/JP2006/302340
(87) International publication number: WO 2006/087972

(57) **Abstract**

Problem: To reduce vibration and noise of a bracket and the like, and also to save a work for manufacturing and shorten manufacturing time, in the case that a forced-excitation of a vibrating apparatus is a cause.

Solution: There are provided a frame body 1, to which a rotation motor 6 is fixed, and dynamic vibration absorbers 2, 3 which are structured in a manner such that slits are made in a portion of the frame body 1 and the slit part is bent in an upward direction, and is configured so that the vibrating portions 2a, 3a of the dynamic vibration absorbers 2, 3 vibrate in the vibrating direction of the frame body 1 being vibrated by the rotation motor 6.

## Description

### Technical Field

The present invention relates to a vibration reducing bracket that reduces vibration of a bracket for fixing vibrating apparatus and reduces noise and the like.

### Background Art

High-speed rotating parts such as a motor, gear, HDD (Hard Disk Drive), and the like are used for Audio Visual (AV) and office Automation (OA) apparatuses such as a DVD (Digital Versatile Disc), printer, and the like. In recent years, greater functionality and speeding up of AV and OA apparatuses have been realized by increasing the rotational speed of these motors and gears; however, increasing vibration caused by such a situation brings about a change for the worse in reading accuracy of a DVD and/or an increase of noise arisen from the apparatus. For that reason, it is desired to reduce vibration and noise generated by a high-speed rotating motor or the like. As a dynamic vibration absorber for reducing such vibration, there is a product that a weight and viscoelastic material are formed in one piece and attached to the rotating shaft of a motor.

### Disclosure of Invention

In the case that the above vibration and noise are caused by resonance of the structures such as the bracket by which a vibrating apparatus is fixed, frame, exterior panel, and the like generated by exciting force of the vibrating apparatus such as a motor and the like, it is possible to reduce the vibration and noise by installing a dynamic vibration absorber using a viscoelastic material as described above (meaning a dynamic vibration absorber with vibration damping) whose resonance frequency is tuned to the resonance frequency of the above structures. However, in such a case that the vibration and noise are caused by forced excitation due to the vibration of the vibrating apparatus, even if the resonance frequency of a dynamic vibration absorber is tuned to the excitation frequency, the phase lag between the displacement and the force arising in the viscoelastic material occurs; therefore, the force produced from the dynamic vibration absorber does not become an opposite phase to the excitation force and the displacement of the point at which the dynamic vibration absorber is installed does not become zero, so the effect of reducing vibration and noise becomes poor.

Thus, a purpose of the present invention is to provide a vibration reducing bracket having dynamic vibration absorbers of a simple structure that enables to save a work for manufacturing and shorten manufacturing time, with a purpose of reducing vibration and noise of a bracket, frame, exterior panel, and the like in the case that a forced-excitation is a cause.

In order to achieve the above purpose, a vibration reducing bracket of the present invention is characterized in that the vibration reducing bracket comprises a bracket composing member, wherein a bracket body to which a vibrating apparatus is fixed and a vibration absorbing portion for reducing vibration of the bracket body are formed by making slits in a portion of the bracket composing member, the vibration absorbing portion having a part connected to the bracket body in one piece and the other part that is separated from the bracket body by formation of the slits and vibrates relatively with respect to the bracket body, and the vibration absorbing portion is formed so that the vibrating part of the vibration absorbing portion vibrates in the same direction as the bracket body that vibrates as the vibrating apparatus is driven.

As a concrete manner, the bracket composing member is preferably a plate material, and the vibration absorbing portion may be configured to have a part that vibrates in its thickness direction by being elastically deformed, the vibration absorbing portion being formed by making slits in the bracket composing member.

Additionally, as another concrete manner, the vibration absorbing portion may be formed by making slits in a portion of the bracket composing member, the thickness direction of which is the same as the vibration direction of the bracket body.

Furthermore, the vibration absorbing portion may be formed by making slits in the bracket composing member and bending the inner part thereof in an upward direction so that the vibration absorbing portion is oriented so as to have a portion vibrating in the same direction as the vibrating direction of the bracket composing member.

According to these configurations, a vibration absorbing portion is formed by making slits in a portion of the bracket composing member or by making slits and bending the inner part thereof in an upward direction so as to vibrate in the same direction as the bracket body that vibrates as the vibrating apparatus is driven. Thus, the displacement and force arising in the vibration absorbing portion vibrates in a common phase, which allows a force of the opposite phase against the force caused by forced excitation to arise. Accordingly, it becomes possible to keep the displacement at the connecting portion between the vibration absorbing portion and bracket body to be zero, and as the result, the vibration of the bracket body can bereduced. Moreover, since the vibration absorbing portion is formed by making slits in a portion of the bracket composing member or by making slits and bending the inner part thereof in an upward direction, the bracket body and vibration absorbing portion can be manufactured in a same manufacturing process, which enables manufacturing time to be reduced.

Additionally, compared with the case, for example, that a vibration absorbing portion is structured of a member different from a bracket composing member, wherein it is needed to consider about the space and sequence for fixing a vibrating apparatus and the vibration absorbing portion to a bracket body, only the vibrating apparatus becomes a member to be fixed by the reason that the vibration absorbing portion is formed by making slits in a portion of the bracket composing member or by making slits and bending the inner part thereof in an upward direction, such a work can be saved. Moreover, since the vibration absorbing portion is formed by making slits in a portion of the bracket composing member or by making slits and bending the inner part thereof in an upward direction, material and the like for making the vibration absorbing portion are not needed, and the manufacturing costs can be thereby reduced. Furthermore, since the space for installing the vibration absorbing portion can be reduced, compared with the case that a vibration absorbing portion is separately manufactured and installed, it is possible to suppress the space occupied by a bracket and the vibration absorbing portion from becoming bigger.

In addition to the above, a vibration absorbing portion of the present invention may be configured to have a weighting member. According to this configuration, in the case that the vibration frequency of a vibrating apparatus is low, and although it is needed to set the resonance frequency in a low value by making the size of the vibration absorbing portion bigger or making the thickness thereof thinner, the resonance frequency of the vibration absorbing portion cannot be set at a low value due to constraints of the size and/or thickness of the bracket, it becomes possible to set the resonance frequency of the vibration absorbing portion in a low value by attaching the weighting member onto the vibration absorbing portion.

Moreover, the vibrating part of a vibration absorbing portion of the present invention has a substantially rectangular shape and the part connected to the bracket body may be configured so as to support the vibrating part in left-right symmetry. According to this configuration, since the vibration absorbing portion is formed so that the substantially rectangular-shaped vibrating part is supported in left-right symmetry, the vibration absorbing portion vibrates so as to have a base point at the substantially center of the vibrating part. In the case if the shape of the vibration absorbing portion is not left-right symmetric with respect to the support point, since the vibration absorbing portion and bracket body vibrate in concert with each other through the connecting part, a change in shape and size of the bracket body causes a change in the resonance frequency of the vibration absorbing portion and it becomes not possible to set the resonance frequency merely by changing in shape and size of the vibration absorbing portion. For this reason, the vibration absorbing portion shaped in left-right symmetry with respect to the support point does not cause to apply a twist to the connecting part between the bracket body and the vibration absorbing portion under vibration of the vibration absorbing portion, so it becomes possible to set the resonance frequency of the vibration absorbing portion merely in accordance with the shape and size thereof without being subject to influence of the shape and size of the bracket body.

In addition, there may be a configuration that the vibration absorbing portion is provided in a number of two in a same shape and disposed at positions being in line symmetric with each other. According this configuration, two vibration absorbing portions are formed in a same shape and disposed at positions being in line symmetric with each other. For example, in the case that the two vibration absorbing portions are configured so as to have a base point of vibration between them, the vibration absorbing portions vibrate so as to have a base point at the substantially center between them. In the case if the shape of the vibration absorbing portion is not left-right symmetric with respect to the support point, since the vibration absorbing portion and bracket body vibrate in concert with each other through the connecting part, a change in shape and size of the bracket body causes a change in the resonance frequency of the vibration absorbing portion and it becomes not possible to set the resonance frequency merely by changing in shape and size of the vibration absorbing portion. For this reason, the vibration absorbing portion shaped in left-right symmetry with respect to the support point does not cause to apply a twist to the connecting part between the bracket body and the vibration absorbing portion under vibration of the vibration absorbing portion, so it becomes possible to set the resonance frequency of the vibration absorbing portion merely in accordance with the shape and size thereof without being subject to influence of the shape and size of the bracket body.

In this case, the two vibration absorbing portions are configured so as to have a base point of vibration between them; wherein, there may be formed a concave portion or convex portion at the center of the two vibration absorbing portions. According to this configuration, since the two vibration absorbing portions are formed in line symmetric so as to have a base point of vibration between them, the two vibration absorbing portions vibrate so as to have a base point at the substantially center thereof. Therefore, an excitation force due to vibration is applied to the center of the two vibration absorbing portions. For this reason, the strength of the portion between the two vibration absorbing portions becomes increased by disposing the concave portion or convex portion in the center of the vibration absorbing portions.

Also in such a case that, for example, vibration absorbing portions having different sizes are disposed to be adjacent to each other, it becomes possible to suppress interference between the adjacent vibration absorbing portions and to increase fatigue strength between the two vibration absorbing portions.

Furthermore, in the present invention, there are provided the plurality of vibration absorbing portions, and the vibrating parts of the vibration absorbing portions may be formed to be different from each other in size. According to this configuration, since a plurality of vibration absorbing portions having different sizes are installed, it becomes possible to reduce vibration, even the vibration frequency of which is different from that assumed at the design stage. For example, even in the case when an arising vibration frequency is different from the assumed frequency, if a plurality of vibration absorbing portions are provided so as to have vibration frequencies being a bit different from each other, the vibration could be reduced by anyone of the plurality of vibrating absorbing portions.

### Brief Description of the Drawings

Fig. 1 is a perspective view of a vibration reducing bracket according to a first embodiment of the present invention.
Fig. 2 is a top view of a vibration reducing bracket according to the first embodiment of the present invention.
Fig. 3 is a rear view of a vibration reducing bracket according to the first embodiment of the present invention.
Fig. 4 is a graphic diagram showing a result of an experiment conducted for confirming the effect of vibration reducing by using a vibration reducing bracket according to the first embodiment of the present invention.
Fig. 5 is a perspective view of a vibration reducing bracket according to the second embodiment of the present invention.

### Best Mode for Carrying Out the Invention

Preferable embodiments of the present invention will now be described with reference to the drawings.

### (First Embodiment)

A vibration reducing bracket 10 (hereinafter called "bracket") according to this embodiment is preferably used for fixing, for example, a rotation motor 6 (vibrating apparatus) and a gear 7 that are used for OA (Office Automation) apparatuses, AV (Audio Visual) apparatuses or the like. The rotation motor 6 has a rotating shaft 6a and a gear 6b disposed at the tip of the rotating shaft 6a. And, the gear 7 is provided so as to mesh with the gear 6b of the rotation motor 6, and transfers the driving power of the rotation motor 6 to the other apparatuses (not shown) by rotating in accordance with rotation of the gear 6b.

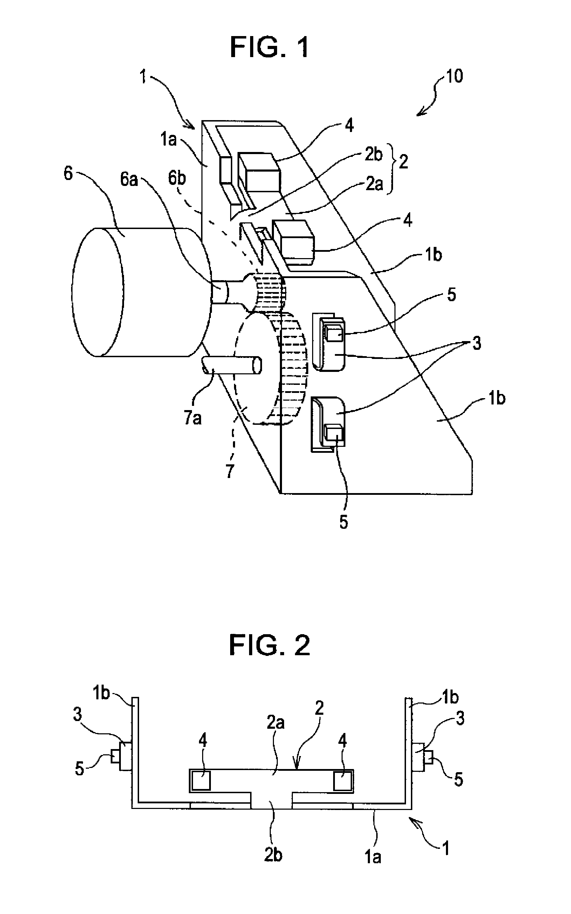

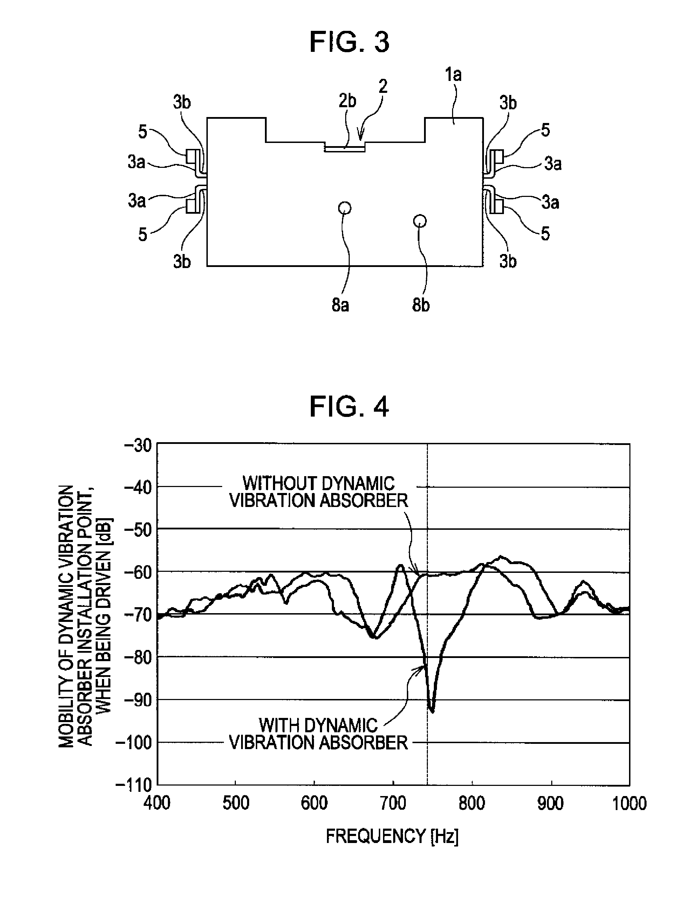

The bracket 10 comprises, for example, a sheet of steel plate (bracket forming member), and includes a frame body (main body of the bracket) 1 and dynamic vibration absorbers (vibration absorbing portion) 2 and 3. The frame body 1 is formed by bending the steel plate in an angular U-shape as shown in Fig. 1 and Fig. 2, and has a substantially rectangular-shaped rear face 1a and substantially trapezoidal-shaped side faces 1b and 1b. In the rear face 1a of the bracket 1, as shown in Fig. 3, there are provided holes 8a and 8b to which the rotating shaft 6a of the rotation motor 6 and the rotating shaft 7a of the gear 7 are rotatably mounted. Incidentally, the portion indicated by dashed lines in Fig. 1 shows the parts (gear 6b and gear 7) that are not visible, since being positioned inside the frame body 1. In Fig. 2 and Fig. 3, the rotation motor 6 and gear 7 shown in Fig. 1 are omitted.

It is noted that although the bracket 10 is described so as to be a member used for fixing the rotation motor 6 employed in an OA apparatus, or the like, the bracket 10 may be also used for fixing other components. The frame body 1 may have a shape other than that described above.

The dynamic vibration absorber 2 is a member used for reducing vibration of the frame body 1 that vibrates in a vertical direction as the installed rotation motor 6 being driven, and is formed in a manner such that slits are made in the steel plate composing an upper portion of the rear face 1a of the frame body 1 and the part inside the slits is bent to the inside of the frame body 1 so as to be substantially perpendicular to the rear face 1a. That is, the dynamic vibration absorber 2 is formed of a common steel plate that composes the frame body 1. Accordingly, material and the like for making the dynamic vibration absorber 2 are not needed; thereby manufacturing costs can be reduced. Furthermore, since the dynamic vibration absorber 2 is formed by making slits in the steel plate composing the frame body 1 and bending the slit part, both the frame body and dynamic vibration absorber 2 can be manufactured in a same manufacturing process, which enables manufacturing time to be reduced.

The dynamic vibration absorber 2 is, specifically, a T-shaped member comprising a rectangular-shaped vibrating portion 2a and a rectangular-shaped supporting portion 2b that is smaller in size than the vibrating portion 2a and connects the vibrating portion 2a in one piece to the frame body 1, the rectangular-shaped supporting portion 2b being positioned at the substantially center of the vibrating portion 2a. The dynamic vibration absorber 2 is configured in a manner such that the steel plate composing an upper portion of the rear face 1a of the frame body 1 is slit in a T-shape and bent to the inside of the frame body 1 by using the supporting portion 2b as a fulcrum so that the vibrating portion 2a becomes substantially perpendicular to the rear face 1a as shown in Fig. 2. With this arrangement, as the frame body 1 vibrates in a vertical direction, the supporting portion 2b of the dynamic vibration absorber 2 vibrates in the vertical direction, wherein the supporting portion 2b becomes a base point of the vibration. That is, the dynamic vibration absorber 2 is formed by making slits in a steel plate and by bending the inner portion thereof in an upward direction so that the vibrating portion 2a vibrates in the same direction as the frame body 1. Accordingly, the vibrating portion 2a is structured so as to vibrate in its thickness direction (the vibrating direction of the frame body 1) by being elastically deformed. Moreover, although the details will be described later, the dynamic vibration absorber 2 is configured so as to be able to suppress the vibration of the frame body 1 in a vertical direction to a minimum level by making the vibrationfrequency of the vibrating portion 2a match to the vibrationfrequency of the excitation force (hereinafter called "excitation frequency") applied to the frame body 1 by the rotation motor 6 or the gears 6b and 7.

In addition, the dynamic vibration absorber 2 has a pair of weighting members 4 and 4. The weighting members 4 and 4 have a weight that is determined so that the vibration frequency of the vibrating portion 2a matches the excitation frequency, and disposed on both end portions of the vibrating portion 2a. It enables the vibration of the frame body 1 to be further reduced that the dynamic vibration absorber 2 has the weighting members 4 and 4. Specifically, in the case that, although there is a need that the vibration frequency of the vibrating portion 2a is desired to be in agreement with the excitation frequency, the size of the dynamic vibration absorber 2 cannot be changed, it becomes possible to set the vibration frequency of the vibrating portion 2a in a lower value by means of the weight members 4 and 4.

The dynamic vibration absorber 2 is configured so that vibration of the frame body 1 can be suppressed to a minimum level when the vibration frequency of the vibrating portion 2a matches the excitation frequency, and as described above, the dynamic vibration absorber 2 is configured in a manner such that the size (specifically the length in longitudinal direction) of the vibrating portion 2a and the weight of the weighting member 4 are determined so that the above frequencies are in agreement with each other.

Specifically, since vibration of the frame body 1 occurs by rotation of the rotation motor 6 and/or meshing of the gears 6b and 7, the vibration frequency of the frame body 1 (Ω) becomes equal to the vibration frequency of the excitation force (Ω₀) that arises by rotation of the rotation motor 6 and/or meshing of the gears 6b and 7. That is, Ω = Ω₀ is established; consequently, since the vibration frequency of the excitation force (Ω₀) arising from rotation of the rotation motor 6 and/or meshing of the gears 6b and 7 is known, the vibration frequency of the frame body 1 (Ω) becomes to be known. Here, when the vibrating portion 2a is assumed to be a plate spring, and then the spring constant is denoted as (k), the mass of the vibrating portion 2a and weighting members 4 and 4 is denoted as (m), and the resonance frequency of the vibrating portion 2a is denoted as (ω), k = mω² (Equation 1) is obtained. As described above, if ω = Ω (Equation 2) is satisfied, vibration of the frame body 1 can be suppressed to a minimum level. Accordingly, the vibration of the frame body 1 in a vertical direction can be suppressed to a minimum level by forming the dynamic vibration absorber 2 on the basis of the size (the length in longitudinal direction) of the vibrating portion 2a and the weight of the weighting member 4 determined so that both the above equations (Equation 1 and Equation 2) are satisfied.

Incidentally, since the dynamic vibration absorber 2 according to this embodiment has a T-shape, the resonance frequency of the dynamic vibration absorber 2 is determined by the length of the vibrating portion 2a and the weight of the dynamic vibration absorber 2 and weighting member 4. Specifically, since the supporting portion 2b supports the vibrating portion 2a in left-right symmetry, rotational moment acting on the supporting portion 2b becomes almost zero, and only a shear force is applied to the supporting portion 2b. Therefore, it is possible to set the vibration frequency of the dynamic vibration absorber 2 by changing the size of the vibrating portion 2a and the weight of the dynamic vibration absorber 2 and weighting member 4.

As described above, since the dynamic vibration absorber 2 is structured by making slits in a steel plate forming the frame body 1 and by bending the slit part in an upward direction, it becomes possible to make a vibration damping of the dynamic vibration absorber 2 to be zero. Specifically, although the vibration damping arises from a phenomenon that vibration is converted to thermal energy due to the friction inside the material of the bracket 10 and an air friction, since a contact friction is eliminated from the vibrating dynamic vibration absorber 2 by integrating the frame body 1 and dynamic vibration absorber 2, only the friction inside the material of the bracket 10 and an air friction occur, and accordingly the vibration damping becomes almost zero. The displacement and force arising in the dynamic vibration absorber 2 thus vibrates in a synchronized phase, which allows an opposite phase force against the excitation force caused by vibration of the rotation motor 6 to arise. Consequently, it becomes possible to keep the displacement at the connecting portion between the dynamic vibration absorber 2 and frame body 1 to be zero, and the vibration can be reduced.

Incidentally, as regards the vibration damping capability of this dynamic vibration absorber 2, when the phase lag between the displacement and force arising in the dynamic vibration absorber 2 is (δ), it is desirable to be tan δ ≤ 0.05, and as regards the material of the bracket composing member forming the frame body 1, it is desirable to use a metal including the above steel plate, stainless plate, aluminum plate, copper plate, and the like, or an engineering plastic, and the like that would have low vibration damping.

A dynamic vibration absorber 3 is a member used for reducing vibration of the frame body 1 vibrating in a horizontal direction, and is formed in a manner such that slits are made in the steel plate composing the side faces 1b and 1b of the frame body 1 and each of the slit parts is bent to the outside of the frame body 1. Incidentally, the horizontal direction used herein means a direction perpendicular to the side faces 1b and 1b of the frame body 1. The dynamic vibration absorber 3 is, as with the dynamic vibration absorber 2, formed of a common steel plate that composes the frame body 1, so material and the like for making the dynamic vibration absorber 3 are not needed; thereby manufacturing costs can be reduced. Furthermore, since being formed by making slits in the steel plate composing the frame body 1 and bending the slit part, both the frame body 1 and dynamic vibration absorber 3 can be manufactured in a same manufacturing process, which enables manufacturing time to be reduced.

The dynamic vibration absorber 3 is formed, specifically, in a manner such that the steel plate composing a side face 1b of the frame body 1 is slit in an angular U-shape and bent to the outside of the frame body 1 so as to be projected substantially perpendicular to the side face 1b and further bent substantially 90 degree. In the following description, the portion that is bent 90 degree is denoted as a vibrating portion 3a and the other portion is denoted as a supporting portion 3b. That is, the dynamic vibration absorber 3 is structured by making slits in a steel plate and by bending the slit inner parts in an upward direction so that the vibrating portion 3a vibrates in the same direction as the frame body 1. In other words, the dynamic vibration absorber 3 is configured so that the vibrating portion 3a becomes substantially parallel with the side face 1b and the supporting portion 3b becomes substantially perpendicular to the side face 1b. With this arrangement, as with the dynamic vibration absorber 2, the vibrating portion 3a of the dynamic vibration absorber 3 vibrates in a horizontal direction (thickness direction of the vibrating portion 3a) by using the supporting portion 3b as a fulcrum, as the frame body 1 vibrates in a horizontal direction. In the side faces 1b of the frame body 1, a pair of the dynamic vibration absorbers 3 structured as described above are provided so as to become line symmetric with each other as shown in Fig. 1 and Fig. 3. Specifically, the two dynamic vibration absorbers 3 are disposed in mirror symmetric so that the supporting portions 3b of thereof are parallel and opposed with each other.

The dynamic vibration absorber 3 has weighting members 5 and 5. And, as described for the dynamic vibration absorber 2, the vibration of the frame body 1 in a horizontal direction can be suppressed to a minimum level by structuring the dynamic vibration absorbers 3 in a manner such that the size and weight of the two dynamic vibration absorbers 3 and weighting members 5 and 5 are determined so that the resonance frequency of the vibrating portion 3a matches the vibration frequency of the frame body 1 in a horizontal direction. Incidentally, the detailed description is omitted since being similar to the case of the dynamic vibration absorber 2.

Since the two dynamic vibration absorbers 3 and 3 are thus disposed in line symmetric with a base point therebetween, the two dynamic vibration absorbers 3 and 3 vibrate so as to have a base point at the substantially center thereof; therefore, as with the case of the dynamic vibration absorber 2, it is possible to set the resonance frequency of the dynamic vibration absorber 3 so as to be in accordance with that of the frame body 1 by changing the size of the dynamic vibration absorber 3 and the weight of the dynamic vibration absorber 3 and weighting members 5 and 5.

As described above, it becomes possible to avoid increasing in the size of the bracket 10 by forming the dynamic vibration absorbers 2 and 3 in a manner such that slits are made in a steel plate forming the frame body 1 and the slit parts are bent. For example, in the case that a dynamic vibration absorber for reducing vibration is separately manufactured and installed on a bracket, there is needed a space for installing the dynamic vibration absorber, fixtures thereof, and the like to the bracket, which causes increasing in the size of the bracket; contrarily, the bracket 10 of this embodiment can resolve such a problem.

### (Experiment)

Next, to confirm the effect of vibration reducing, an experiment using a bracket 10 according to this embodiment has been conducted. Specifically, "mobility" at the point where a dynamic vibration absorber is installed has been measured in respective cases when a dynamic vibration absorber 2 was installed on a frame body 1 or not. The mobility means a ratio of a force (excitation force) in a vibrating direction that acts on a point in a mechanical system, vibrating at single vibration mode, or on a plane, vibrating at a constant velocity and phase, to the velocity of the point or the plane. As illustrated in Fig. 4, when the frequency of vibration (vibration frequency) of the frame body is 740Hz, the mobility in the case having the dynamic vibration absorber was approximately -93 [dB], while the mobility in the case not having the dynamic vibration absorber was approximately -62 [dB]. That is, it can be read from the diagram that the vibration was reduced approximately 31 [dB] by the function of the dynamic vibration absorber, even the excitation force of 740 Hz arising from a rotation motor and gears acted on. It means that, from -31=20log(V'/V), the amplitude was reduced to 1/35. Here, V' denotes the amplitude of vibrating velocity of the frame body to which the dynamic vibration absorber was disposed, and V denotes the amplitude of vibrating velocity of the frame body to which no dynamic vibration absorber was disposed.

### (Outline of this embodiment)

As described above, a vibration reducing bracket 10 of the first embodiment comprises a frame body 1, to which a rotation motor 6 is fixed, and dynamic vibration absorbers 2 and 3 which are structured by making slits in a portion of a steel plate forming the frame body 1 and by bending the slit part in an upward direction, and is configured so that at least a part of the dynamic vibration absorber 2 and 3 vibrates in the vibrating direction of the frame body 1 that is vibrated by the rotation motor 6.

According to this configuration, since the dynamic vibration absorbers 2 and 3 are formed by making slits in a steel plate forming the frame body 1 and by bending the slit part in an upward direction so as to vibrate together with the frame body 1 that is vibrated by the rotation motor 6, it becomes possible to make the vibration damping of the dynamic vibration absorbers 2 and 3 to be zero. Thereby, the displacement and force arising in the dynamic vibration absorbers 2 and 3 vibrates at a same phase, which allows a force of the opposite phase against the excitation force to arise. Consequently, it becomes possible to keep the displacement at the connecting portion between the dynamic vibration absorbers 2 and 3 and frame body 1 to be zero, and as a result, the vibration of the frame body 1 can bereduced. Furthermore, since the dynamic vibration absorbers 2 and 3 are formed by making slits in the steel plate composing the frame body 1 and bending the slit parts, both the frame body 1 and dynamic vibration absorbers 2 and 3 can be manufactured in a same manufacturing process, which enables manufacturing time to be reduced.

Additionally, in the case that, for example, dynamic vibration absorbers 2 and 3 are structured separately from a steel plate forming a frame body 1, it is needed to consider about the space and sequence for installing a rotation motor 6 and the dynamic vibration absorbers 2 and 3 to the frame body 1, while such a work can be saved since dynamic vibration absorbers 2 and 3 are configured so as to be portions of a frame body 1 projecting therefrom, and only the rotation motor 6 is fixed to the frame body 1. Moreover, since the dynamic vibration absorbers 2 and 3 are structured as bending portions of a steel plate forming a frame body 1 in an upward direction, material and the like for making the dynamic vibration absorbers 2 and 3 are not needed; thereby manufacturing costs can be reduced. Furthermore, since the space for installing the dynamic vibration absorbers 2 and 3 can be reduced, compared with the case that dynamic vibration absorbers 2 and 3 are separately manufactured and installed, it is possible to suppress the space occupied by a frame body 1 and dynamic vibration absorbers 2 and 3 from becoming bigger.

The dynamic vibration absorbers 2 and 3 of this embodiment are configured so as to have weighting members 4 and 5. In the case that the vibration frequency of a rotation motor 6 is low, and the resonance frequency of the dynamic vibration absorbers 2 and 3 cannot be set at a low value due to constraints of the size and/or thickness of the bracket 10 although it is needed to set a resonance frequency in a low value by making the size of the dynamic vibration absorbers 2 and 3 bigger or making the thickness of a frame body 1 thinner, it becomes possible to set the resonance frequency of the dynamic vibration absorbers 2 and 3 in a low value by attaching the weighting members 4 and 5 onto the dynamic vibration absorbers 2 and 3.

Furthermore, the dynamic vibration absorber 2 of this embodiment is configured so that its vibrating portion has a substantially rectangular shape and is supported in left-right symmetry. According this configuration, the dynamic vibration absorber 2 vibrate so as to have a base point at the substantially center thereof, since being formed so that the substantially rectangular-shaped vibrating portion 2a is supported in left-right symmetry. In the case if the shape of the dynamic vibration absorber 2 is not left-right symmetric with respect to the support point, since the dynamic vibration absorber 2 and frame body 1 vibrate in concert with each other through the connecting portion, a change in shape and size of the frame body 1 causes a change in the resonance frequency of the dynamic vibration absorber 2, and it becomes not possible to set the resonance frequency merely by changing in shape and size of the dynamic vibration absorber 2. For this reason, the dynamic vibration absorber 2 shaped in left-right symmetry with respect to the support point does not cause to apply a twist to the connecting potion between the frame body 1 and the dynamic vibration absorber 2 under vibration of the dynamic vibration absorber 2, so it is possible to set the resonance frequency of the dynamic vibration absorber 2 merely by the shape and size of the dynamic vibration absorber 2 without being subject to influence of the shape and size of the frame body 1.

Additionally, two dynamic vibration absorbers are provided in this embodiment, and the dynamic vibration absorbers having a same shape are disposed in line symmetric. According this configuration, the two dynamic vibration absorbers having a same shape are formed so as to be in line symmetric. For example, in the case that two dynamic vibration absorbers are configured so as to have a base point of vibration between them as in this embodiment, the dynamic vibration absorbers vibrate so that the substantially center of between the two dynamic vibration absorbers is a base point of vibration. In the case if the shape of the dynamic vibration absorbers 3 are not in line symmetric with respect to the support point, since the dynamic vibration absorbers 3 and frame body 1 vibrate in concert with each other through the connecting portion, a change in shape and size of the frame body 1 causes a change in the resonance frequency of the dynamic vibration absorbers 3, and it becomes not possible to set the resonance frequency merely by changing in shape and size of the dynamic vibration absorbers 3. For this reason, the dynamic vibration absorbers 3 shaped in left-right symmetry with respect to the support point does not cause applying a twist to the connecting potion between the frame body 1 and the dynamic vibration absorber 2, so it becomes possible to set the resonance frequency of the dynamic vibration absorbers 3 merely by the shape and size of the dynamic vibration absorbers 3 without being subject to influence of the shape and size of the frame body 1.

### (Example modified from this embodiment)

It is noted that a shape of a dynamic vibration absorber for reducing vibration is not limited to the shape described above. Specifically, whatever configuration may be available, as long as it is formed so that slits are made in a frame body 1 and the slit part is bent. It is also noted that although a dynamic vibration absorber is configured so as to suppress vibration of a frame body in a vertical and horizontal directions in this embodiment, the configuration of the dynamic vibration absorber can be changed according to the shape of the frame body and/or the vibrating direction. For example, in the case that a frame body vibrates in a slanting direction, a dynamic vibration absorber may be configured so as to work in the direction, or for the purpose of reducing vibration of a rotating shaft 6a in the axis direction, a dynamic vibration absorber may be installed on the rear face 1a.

Although the dynamic vibration absorbers 2 and 3 have weighting members 4 and 5 respectively in this embodiment, ones not having the weighting members 4 and 5 may be available. For example, if the equations illustrated in the above description of embodiment are satisfied merely by the weight of the dynamic vibration absorber 2 and 3, the weighting members 4 and 5 are not needed to be attached. It is noted that although the frame body 1 has a pair of dynamic vibration absorbers 3 formed in each of the side faces 1b and 1b respectively, the number of the pair of dynamic vibration absorber 3 is not limited but may be altered depending on vibration of the frame body. Furthermore, in the case when there are a plurality of excitation frequencies to be subjects of measures against vibration and noise, it may be possible to configure dynamic vibration absorbers that are tuned to corresponding a plurality of resonance frequencies.

Incidentally, in the case that a plurality of dynamic vibration absorbers are provided, the sizes of the vibrating portions 3a are desirable to be different from each other. As described above, the size of a vibrating portion is determined so as to match the resonance frequency applied to a frame body 1 by a rotation motor 6 and/or gears 6b and 7. Even in the case that an assumed excitation frequency would be different with the actual excitation frequency, it becomes possible to reduce the arising vibration by forming vibrating portions having different sizes from each other, when any one of the dynamic vibration absorbers would correspond to the excitation frequency.

### (Second Embodiment)

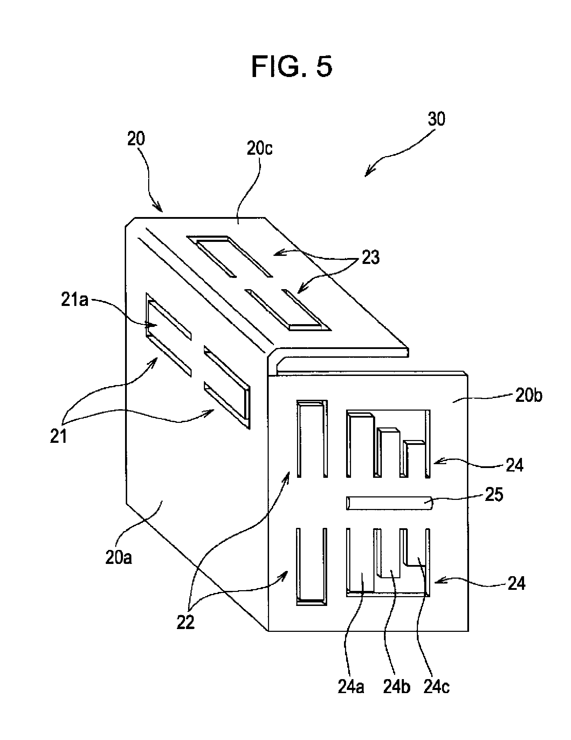

Next, a second embodiment of the present invention will now be described. The dynamic vibration absorbers 2 and 3 of a vibration reducing bracket 10 of the first embodiment are formed by making slits in the frame body 1 and by bending the slit portion in an upward direction; being different from that, the dynamic vibration absorbers of a vibration reducing bracket 30 of this embodiment are formed by making slits in a frame body 20 as shown in Fig. 5. It is noted that a rotation motor 6 and the like to be installed on the rear face 20a are omitted from the drawing in Fig. 5.

The frame body 20 is formed by bending a steel plate so as to have a rear face 20a, and a side face 20b and top face 20c respectively perpendicular to the rear face 20a. On the rear face 20a, there are provided dynamic vibration absorbers 21 and 21 serving for reducing vibration arising in a direction perpendicular to the rear face 20a. That is, the dynamic vibration absorbers 21 are formed in a manner such that slits are made in a portion of the steel plate, the thickness direction of which is in accordance with the vibrating direction of the frame body 20. Specifically, the dynamic vibration absorber 21 has a vibrating portion 21a that is formed by being slit in an angular U-shape on the rear face 20a. The vibrating portion 21a having a substantially rectangular-shape is connected to the frame body 20 at one end thereof, and vibrates so as to have a base point at the connecting portion. That is, the vibrating portion 21a vibrates by being elastically deformed in its thickness direction. Here, the dynamic vibration absorbers 21 and 21 are disposed in line symmetric with the connecting portion therebetween, the connecting portion being a base point of vibration. With this arrangement, as with the first embodiment, vibration of the vibrating portion 21a enables the two dynamic vibration absorbers 21 to reduce the vibration arising in a direction perpendicular to the rear face 20a. Incidentally, as with the first embodiment, the length and the like of the vibrating portion 21a are set according to arising vibration frequencies and the like.

Additionally, dynamic vibration absorbers 22 and 22 and dynamic vibration absorbers 23 and 23 similar to the dynamic vibration absorber 21 are also provided respectively on the side face 20b and top face 20c to damp vibration arising in a horizontal and/or vertical directions.

Furthermore, dynamic vibration absorbers 24 and 24 disposed in line symmetric as with other dynamic vibration absorbers are provided so as to be adjacent to the dynamic vibration absorbers 22 and 22 on the side face 20b. The dynamic vibration absorber 24 has three vibrating portions 24a, 24b and 24c being different each other in size. With a dynamic vibration absorber having three vibrating portions in a dynamic vibration absorber, it becomes possible to reduce vibration, even the vibration frequency of which is different from that assumed at the design stage. Specifically, even in the case when an arising vibration frequency is different from the assumed frequency, anyone of the plurality of vibrating portions 24a, 24b and 24c that are formed so as to be in accordance to an assumed vibration frequency and its adjacent values could damp the vibration. That is, one dynamic vibration absorber brings the same effect as obtained by installing a plurality of dynamic vibration absorbers, each having a vibrating portion being different each other in their size.

In addition to the above, a convex portion 25 is provided between the dynamic vibration absorbers 24 and 24 so as to be projected in a half round-shape outwardly from the frame body 20. The strength of the portion between the dynamic vibration absorbers 24 and 24 becomes increased by disposing the convex portion 25 between the dynamic vibration absorbers 24 and 24. Specifically, since the two dynamic vibration absorbers 24 and 24 are configured so as to have a base point therebetween, the dynamic vibration absorbers 24 and 24 vibrate so that a base point of vibration is at a place close to the center thereof. Therefore, excitation force is applied to the place close to the center of the dynamic vibration absorbers 24 and 24. For this reason, the strength of the portion between the dynamic vibration absorbers 24 and 24 becomes increased by disposing the convex portion 25 between the dynamic vibration absorbers 24 and 24.

Even in the case that dynamic vibration absorber 22 is disposed at a place adjacent to the dynamic vibration absorbers 24 and 24 as in this embodiment, it becomes possible to suppress interference between the adjacent dynamic vibration absorbers and to increase fatigue strength of the portion between the two dynamic vibration absorbers. It is noted that a concave portion being projected toward the inner side of the frame body 20 may be provided between the dynamic vibration absorbers.

### (Outline of this embodiment)

As described above, a vibration reducing bracket 30 of the second embodiment comprises a frame body 20 for installing a rotation motor 6 and dynamic vibration absorbers 21, 22, 23 and 24 formed by making slits in portions of the steel plate composing the frame body 20, is configured in a manner such that at least a part of the dynamic vibration absorbers 21, 22, 23 and 24 vibrates in the same direction as of the frame body 20 vibrating due to a rotation motor 6.

An effect similar with the first embodiment can be thereby obtained. In addition, the forming of dynamic vibration absorbers by making slits in a steel plate composing a frame body 20 as in this embodiment can be performed, for example, by punching work, so the manufacturing process can be shortened, compared to a dynamic vibration absorber formed by being bent according to the first embodiment.

This embodiment provides a configuration such that two dynamic vibration absorbers 24 and 24 are formed so as to have a base point of vibration therebetween and a convex portion 25 (or a concave portion) is disposed at the center between the dynamic vibration absorbers 24 and 24. According to this configuration, since the two dynamic vibration absorbers 24 and 24 are formed in line symmetric so as to have a base point of vibration therebetween, the dynamic vibration absorbers 24 and 24 vibrate so as to have a base point at the substantially center thereof. Therefore, excitation force due to vibration is applied to the center of the dynamic vibration absorbers 24 and 24. For this reason, the strength of the portion between the two dynamic vibration absorbers 24 and 24 becomes increased by disposing the convex portion 25 (or a concave portion) between the two dynamic vibration absorbers 24 and 24.

### (Example modified from this embodiment)

It is noted that although the dynamic vibration absorbers 24 and 24 of this embodiment respectively have three vibrating portions, the number of the vibrating portion is not limited to this but may be two, three or more than three. It may be altered as appropriate depending on vibration arising. It is also noted that each dynamic vibration absorber may be provided with a weight at the vibrating portion thereof. Moreover, the number of the dynamic vibration absorber may be one or more, and two dynamic vibration absorbers may not necessarily be provided in line symmetric.

The present invention is described in the above preferable embodiments, but the present invention is not limited to these examples. It is understood that various other embodiments are possible within the scope and split of the present invention. Furthermore, although the function and effect obtained by constitution of the invention are described in the present embodiments, these function and effect are described as examples and do not limit the present invention.

### Industrial Applicability

A vibration reducing bracket according to the present invention is preferably used in the field of a motor, gear, HDD (Hard Disk Drive), and the like used for AV, OA apparatus such as DVD (Digital Versatile Disc), printers, and the like, wherein it is required to reduce vibration caused by forced-excitation.

## Claims

1. A vibration reducing bracket comprising a bracket composing member,
wherein a bracket body to which a vibrating apparatus is fixed and a vibration absorbing portion for reducing vibration of the bracket body are formed by making slits in a portion of the bracket composing member,
the vibration absorbing portion having a part connected to the bracket body in one piece and another part that is separated from the bracket body by formation of the slits and vibrates relatively with respect to the bracket body, and
the vibration absorbing portion is formed so that the vibrating part of the vibration absorbing portion vibrates in the same direction as the bracket body that vibrates as the vibrating apparatus is driven.

2. The vibration reducing bracket according to Claim 1,
wherein, the bracket composing member is composed of a plate material, and
the vibration absorbing portion has a part that vibrates in its thickness direction by being elastically deformed, the vibration absorbing portion being formed by making slits in the bracket composing member.

3. The vibration reducing bracket according to Claim 2,
wherein, the vibration absorbing portion is formed by making slits in a portion of the bracket composing member, the thickness direction of which is the same as the vibration direction of the bracket body.

4. The vibration reducing bracket according to Claim 2,
wherein the vibration absorbing portion is formed by making slits in the bracket composing member and bending the inner part thereof in an upward direction so that its vibrating part is oriented in the same direction as the vibrating direction of the bracket composing member.

5. The vibration reducing bracket according to any one of Claims 1 to 4,
wherein the vibration absorbing portion has a weighting member.

6. The vibration reducing bracket according to any one of Claims 1 to 5,
wherein the vibrating part of the vibration absorbing portion has a substantially rectangular shape and the part connected to the bracket body is formed so as to support the vibrating part in left-right symmetry.

7. The vibration reducing bracket according to any one of Claims 1 to 5,
wherein the vibration absorbing portion is provided in a number of two, and
the two vibration absorbing portions are formed in the same shape and disposed at positions being line symmetric with each other.

8. The vibration reducing bracket according to Claim 7,
wherein the two vibration absorbing portions are disposed so as to have a base point therebetween, and
a concave portion or a convex portion is provided in the center between the two vibration absorbing portions.

9. The vibration reducing bracket according to any one of Claims 1 to 8,
wherein the vibration absorbing portions is provided in a plurality, and
the vibrating parts of each of the vibration absorbing portions are formed to be different in size from each other.
